# EUROPÄISCHE PATENTANMELDUNG

(11) **EP 4 454 480 A1**
(43) Veröffentlichungstag der Anmeldung: **30.10.2024**
(21) Anmeldenummer: 23170645.8
(22) Anmeldetag: 28.04.2023
(51) Int. Cl.: A23J 3/14, A23J 1/14, A23J 3/16, A23J 3/22

(54) **PROTEINEXTRAKTIONSVERFAHREN FÜR LEBENSMITTEL**

(71) Anmelder: Prodapi GmbH, 24941 Flensburg (DE)
(72) Erfinder: Zillmann, Marc, 24941 Flensburg (DE)
(74) Vertreter: K & H Bonapat Patentanwälte Koch · von Behren & Partner mbB

(57) **Zusammenfassung**

Die Erfindung betrifft ein Verfahren zum Herstellen eines Proteinproduktes aus einem Pflanzenausgangsmaterial als ganze Leguminosensaat, Leguminosengranulat oder Leguminosenmehl mit folgenden Schritten:
- Trennen einer Feinfraktion von einer Grobfraktion;
- Versetzen der Feinfraktion mit Wasser und Zugeben von Lauge, vorteilhaft Natronlauge, zur Verschiebung des pH-Wertes in den basischen Bereich, um Protein zu extrahieren;
- Separieren unlöslicher Fasern von Protein in wässriger Lösung mittels Dekantierens;
- Zugeben einer Säure zu der erhaltenen wässrigen Proteinlösung, um den pH-Wert in den sauren Wertebereich zu verschieben und damit eine Proteinkoagulation zu erzielen;
- Aufspalten der sauren Proteinlösung in eine Protein-Aufschlämmung mit ca. 20%-30% Trockensubstanz und einen Abwasserstrom;
- Zugeben von Wasser zur Senkung des Trockensubstanzgehaltes und ausgleichende Zugabe von Säure zum Halten des Säurepegels;
- weiteres Trennen des Mediums in eine Protein-Aufschlämmung mit einem Gehalt an Trockensubstanz von 25% bis 30% und in einen weiteren Abwasserstrom; und
- trocknungsfreies Herstellen des Proteinproduktes aus der Protein-Aufschlämmung mit dem Gehalt an Trockensubstanz von 25% bis 30%.

## Beschreibung

Die vorliegende Erfindung betrifft die Extraktion von Protein(en) aus pflanzlichen Rohstoffen für die Herstellung von insbesondere fleischlosen Lebensmitteln oder sogenannten Fleisch-Ersatzprodukten. Zur Erfindung gehören neben einem Verfahren zur Proteinextraktion auch ein daraus geschaffenes Proteinprodukt, wie auch eine Vorrichtung zur Herstellung des Proteinproduktes.

Mit dem wachsenden Bewusstsein einer nachhaltigen Ernährung spielen bei der Lebensmittelherstellung pflanzliche Produkte eine immer größere Rolle - auch weil sich immer mehr Menschen fleischfrei ernähren wollen. Die Zahl der Vegetarier stieg allein in Deutschland laut einer Allensbach-Studie auf mittlerweile 7,5 Millionen Menschen (Stand 2021). Mit diesem wachsenden Trend boomen auch Fleischersatzprodukte aus Fleischalternativen wie Tofu, Seitan, Soja oder Erbsen. Selbst im Koalitionsvertrag der Bundesregierung von 2023 ist zu lesen: "Wir stärken pflanzliche Alternativen und setzen uns für die Zulassung von Innovationen wie alternative Proteinquellen und Fleischersatzprodukten in der EU ein."

Die Ernährungsindustrie setzt dabei zum Zwecke einer nachhaltigen Ökonomie genauso wie die Energieerzeugung auf eine Dekarbonisierungsstrategie. Grundsätzlich schneiden ja schon aus Umweltsicht Fleischalternativen weit besser ab als tierisches Fleisch: Sie verursachen weniger Treibhausgase, verbrauchen weniger Wasser und Flächen als Rindfleisch, Schweinefleisch oder Geflügel. Die Wahl bestimmter pflanzlicher Proteine und spezielle Extraktionsverfahren zu deren Gewinnung können einen weiteren entscheidenden Schlüssel für den erfolgreichen Wandel für eine zukunftsorientierte Nachhaltigkeit spielen.

Vor diesem Hintergrund erfreut sich auch die Erbse wachsender Beliebtheit. Bei der industrialisierten Erzeugung werden aus der Erbse deren Proteine extrahiert, die als funktioneller Inhaltsstoff für verschiedene Lebensmittel, vorrangig auch für den Fleischersatz dient. Die Erbse bindet Stickstoff aus der Luft und sorgt dafür, dass insgesamt weniger Düngemittel genutzt werden kann. Erbsen sind sehr unempfindlich und kommen ohne Einsatz von schädlichen Mitteln aus. Für echte Nachhaltigkeit kann der Rohstoffbedarf auch aus regionalem Anbau bei kürzesten Transportwegen aus Deutschland sichergestellt werden, was der Erbse einen weiteren Vorteil verschafft.

Ihre Beliebtheit verdankt die Erbse aber nicht zuletzt dem Umstand, dass sie essentielle Nährstoffe und nur wenig Fett enthält. Das in den Früchten enthaltene Eiweiß wird u.a. dadurch gewonnen, indem die reifen Früchte (meist gelbe Schälerbsen) aus der Schote gelöst und gemahlen werden. Das auf diese Weise entstandene Erbsenmehl wird von Fasern und Stärke befreit, sodass nur das Erbsenproteinisolat übrigbleibt. Auf diese Weise hergestellte vegane Ersatzprodukte beinhalten hohe Mengen an Protein. Hinzu kommen ausschließlich natürliche Zutaten wie Wasser, Kartoffelstärke, Gewürze und Öle.

Details einer solchen Extraktion zum Stand der Technik gehen beispielsweise aus der WO2021140056A1 hervor, in der die Herstellung eines Fleischersatzes auf pflanzlicher Basis mittels einer durch Nassextrusion einer Mischung aus pflanzlichen Protein-Isolaten von beispielsweise Nutralys S85F oder Pisane B9 zusammen mit Gluten beschrieben ist. Das in der US 11,304,435 B2 beschriebene Verfahren geht von einer wässrigen Aufschlämmung aus, bei der wasserunlösliche Hülsenfrucht-Proteine und andere wasserunlösliche Komponenten abgeschieden werden, um eine wasserlösliche, proteinreiche flüssige Fraktion zu erhalten, die sowohl hydrolysierte Globulinproteine als auch hydrolysierte Albumin-Proteine umfasst. Eine nachfolgende Ultrafiltration trennt nach Molekulargewicht und konzentriert dabei hydrolysierte Globulinproteine und hydrolysierte Albumin-Proteine in einem Retentat. Aus letzterem wird der Wasseranteil abgeschieden, um eine trockene Pflanzenproteinzusammensetzung mit einer Konzentration von mindestens 70 % bezogen auf das Trockengewicht, bereitzustellen. Ähnliche Verfahren sind in den Druckschriften US 2020/0100524 A1, der CN 111528334 A, der US 10,321,705 B2 oder der EP2498620 B1 aufgezeigt. Diese Erfahren zeigen sich als sehr energieaufwändig. Schließlich zeigt die WO 2022/011475 A1 ein Aufarbeiten von z.B. Leguminosen mit Trocknungs-Schritten (mahlen etc.) und Nass-Schritten (saure Fällung, Dekanter etc.), dessen Endprodukt ein Proteinkonzentrat ist. Zur Anwendung kommen eine pH-Wert-Einstellung zur Proteinkonzentrierung mit nachfolgender Zentrifugation zur Separation von Stärke, unlöslichen Fasern und einem verbleibenden wässrigen proteinhaltigen Überstand, der einer isoelektrischen Proteinausfällung mit erneuter Zentrifugation unterzogen wird - in der Regel durch Einstellung des pH-Werts auf einen Wert zwischen etwa 3,5 und 4,5. Das so gewonnene Protein wird durch Neutralisierung, Entsalzung und Trocknung weiterverarbeitet, um ein trockenes Proteinisolat herzustellen. Parallel wird der aus der zweiten Zentrifugation verbleibende Rückstand zu einem FeststoffAnteil mit löslichen Fasern und einem Anteil als recyceltes Wasser separiert.

Während der Markt durch Standardprodukte an obigen Proteinisolaten dominiert wird, verlangen Kunden der Lebensmittelherstellung jedoch vermehrt Produkte mit spezifischen funktionellen Eigenschaften, welche die Qualität der Endprodukte bestmöglich unterstützen. Hier gilt es, Lebensmittel mit hochqualitativen Proteinen und den gewünschten Produkteigenschaften anbieten zu können. Die Aufgabe der vorliegenden Erfindung liegt somit u.a. darin, ein Verfahren zur Extraktion von Proteinen zur Verfügung zu stellen, mit dem zum einen eine breite Rezeptur für Lebensmittel entwickelbar ist, die eine optimierte Geschmacks- und Nährstoffbilanz aufweist; Zum anderen gilt es zur Ökobilanz den zur Extraktion benötigten Energiebedarf zu minimieren.

Gelöst wird diese Aufgabe durch ein Verfahren gemäß Hauptanspruch 1 und durch ein Proteinprodukt gemäß Anspruch 9, sowie einer Vorrichtung zur Herstellung des Proteinproduktes gemäß Anspruch 10. Vorteilhafte Ausführungsformen gehen aus den jeweiligen Unteransprüchen hervor.

Das erfindungsgemäße Verfahren umfasst folgende grundsätzliche Schritte:
Als Ausgangsprodukt für das Verfahren kommen ganze Hülsenfrüchte infrage, und damit grundsätzlich alle Saaten aus dem Bereich der Leguminosen wie Linsen, Ackerbohnen, Kichererbsen, Erdnüsse, Soja, Lupinen und Erbsen. Das Verfahren ist aber auch auf Granulate und Mehle anwendbar, die durch eine Vorbehandlung aus Pflanzenstoffen bereits gewonnen wurden. Insofern ein Proteinextrakt aus diesen Ausgangsstoffen wie Granulat oder Mehl hergestellt werden soll, werden letztere unter Auslassung der folgend aufgezeigten Schritte i) bis ii) dem späteren Schritt iii) dem Verfahren zugeführt.
i) Obiges Ausgangsprodukt der Leguminosen-Frucht wird geschält; anschließend folgt eine
ii) Trocken-Vermahlung zu Granulat mit einem Trockensubstanzgehalt von mindestens 84%
iii) Von der aus Schritt ii) erhaltenen Substanz wird eine Feinfraktion von einer Grobfraktion getrennt vorteilhafterweise mittels Windsichtung;
iv) Die aus Schritt iii) erhaltene Feinfraktion wird mit unter einem Massen-Mischungsverhältnis von 1:6 mit Wasser (1 Teil Feinfraktion zu 6 Teilen Wasser) versetzt und der pH-Wert wird durch Zugabe von Lauge in den basischen Bereich verschoben (Proteinextraktion);
v) Aus diesem Medium werden mittels Dekantierens unlösliche Fasern von Protein in wässriger Lösung separiert (Extrakt-Dekantierung);
vi) der aus Schritt v) erhaltenen wässrigen Proteinlösung wird eine Säure zugegeben, um den pH-Wert in den sauren Wertebereich (von 3,5 bis 5,0) zu verschieben (Proteinkoagulation);
vii) Sodann erfolgt ein Aufspalten der sauren Proteinlösung in eine Protein-Aufschlämmung mit ca. 20%-30% Trockensubstanz und einen Abwasserstrom;
viii) Der aus Schritt vii) erhaltenen Protein-Aufschlämmung wird Wasser zugegeben, um den Gehalt an Trockensubstanz zu senken. Zum Halten des Säurepegels (pH 3,5 bis 5,0) wird ferner erneut Säure zugegeben (Protein-Washing);
ix) Dann folgt eine weitere Trennung des Mediums aus Schritt viii) in eine Protein-Aufschlämmung mit einem Gehalt an Trockensubstanz von 25% bis 30% und in einen finalen Abwasserstrom;

Das aus Schritt ix) erhaltene Proteinprodukt, d.h. die Protein-Aufschlämmung mit einem Gehalt an Trockensubstanz von 25% bis 30% kann nachfolgend für eine Lebensmittelherstellung einer direkten Weiterverarbeitung zugeführt werden, bzw. kann es ebenso als gefrorener Artikel eingelagert werden.

Gemäß einer vorteilhaften Ausführungsform wird Schritt ix), d.h. die weitere Trennung des Mediums aus Schritt viii) in eine Protein-Aufschlämmung mit einem Gehalt an Trockensubstanz von 25% bis 30% und in einen finalen Abwasserstrom, wiederholt ausgeführt, bevor die Protein-Aufschlämmung in die nachfolgende Lebensmittelherstellung gelangt. Durch mehrmaliges Durchlaufen des Schrittes ix) kann das geschmackliche Profil neutraler gestaltet werden. Respektive auch über die Wahl des pH-Wertes können die Verhältnisse aus Globulin und Albumin verschoben werden. Was ein leichter lösliches, bzw. schwerer lösliches Protein bewirkt und die Eigenschaften als Emulgator beeinflusst, ebenso wie die Schaumbildung.

Das oben beschriebene Verfahren zeichnet sich insbesondere durch den jeweils angegebenen Gehalt an Trockensubstanz aus, der bewusst niedrig gehalten ist. Damit arbeitet das erfindungsgemäße Verfahren bereits ab einem Trockensubstratgehalt von 10%. Hier spielt zum einen das in Schritt iv) genannte Mischungsverhältnis zwischen Feinfraktion und Wasser ein Rolle, sowie der aus den Schritten vii) und viii) angegebene gewonnene Trockensubstanzgehalt. Das hat den Vorteil, dass weniger Energie benötigt wird als bei herkömmlichen Verfahren, da keine energieintensiven Trocknungsschritte angewandt werden. Das erhaltene Proteinprodukt aus Schritt ix) hat immer noch einen bedeutenden Nassanteil mit einer Trockenmasse von mindestens 25 %. Es wird kein Pulver hergestellt und der Nassanteil wird eingebunden, um Energie während des Prozesses zu sparen. Das aus Schritt ix) erhaltene Proteinprodukt zeigt nichtsdestotrotz ein Proteingehalt von mindestens 80 % in der Trockenmasse.

Dabei wurde im Rahmen der Entwicklung der Erfindung erkannt, dass die durch das erfindungsgemäße Verfahren eingesparte Energie nicht an anderer, d.h. nachfolgender Stelle wieder aufgebracht werden muss. Für einen lagerstabilen Zustand des Proteinproduktes lässt sich einerseits ein Energieaufwand entsprechend der Verdampfungswärme von Wasser von ca. 2257 kJ/kg begründen oder andererseits ein Energieaufwand gemäß der Schmelzwärme von Wasser von ca. 334 kJ/kg. Beide Wege würden helfen einen lagerstabilen Zustand zu erreichen. Bei der Trocknung haben wir einen technischen Wirkungsgrad von Trocknungsanlagen von ca. 40 bis 45%. Bei Wärmepumpen (zur Erzeugung der "Kälte"), liegt der Wirkungsgrad von elektrisch zu thermisch bei ca. 200%. Neben diesen Energieeinsparungen, erhalten wir auch die Funktionalität des Proteins. Durch die geringere Schädigung des Proteins, erhalten wir eine bessere Löslichkeit (bei einigen getrockneten Produkten liegt die Löslichkeit bei < 10%) respektive haben wir auch einen Einfluss auf die Sensorik, was bedeutet, dass das Protein in einer Emulsion heller bleibt und es keinen "Kochgeschmack" entwickelt, welches aus dem Trocknungs- und damit verbundenen Erhitzungsprozess resultiert.

Im Folgenden sind zusätzliche Verarbeitungsschritte als vorteilhafte weiterführende Ausführungsformen aufgezeigt, deren Ausgangsprodukt auf das aus obigem Schritt ix) erhaltene Proteinprodukt mit einem Gehalt an Trockensubstanz von 25% bis 30% zurückgeht und die nach Abschluss eines jeweiligen Prozessschrittes in den nächsten vorteilhaften Prozessschritt überführt werden können oder aber direkt in die Lebensmittelproduktion einfließen:
x) Die erhaltene Protein-Aufschlämmung mit einem Gehalt an Trockensubstanz von 25% bis 30% wird auf einen pH-Wert von zwischen 4,0 und 9,0 eingestellt und in einem Extruder extrudiert. Die Wahl des pH-Wertes erfolgt vor dem Hintergrund des Löslichkeitsbedarfes an Protein. In der Regel liegt der pH-Wert geeignet im tiefsauren Bereich bei ca. 4,5. Für Anwendungen, die eine hohe Löslichkeit erfordern, kann der pH-Wert auf bis zu 8,5 angehoben werden, um eine maximale Löslichkeit des Proteins zu erreichen. Die Einstellung des pH-Wertes erfolgt mittels Natronlauge und Säure. Letztere kann mineralischen Ursprungs (Salzsäure, Phosphorsäure) oder organischen Ursprungs (Ethansäure, Citronensäure) sein.
   In einer vorteilhaften Ausführungsform wird im Extruder-Zuführschacht oder bereits im Extrusions-Teig zusätzlich ein Triebmittel beigemischt. Dieses kann Karbonat, Phosphat oder Tartrat beinhalten. Es soll dem Zweck dienen, in der Aufschmelzung der Proteine zu zerfallen und Gas freizusetzen, um eine lockere Struktur zu erreichen.
   Auch können weitere Zutaten beigemischt werden, die beispielsweise in einem Feed vorgemischt sind. Hierzu zählen beispielsweise Öle und/oder Fette, die in Nebendüsen eindosiert werden. Ebenso können Aromen beispielsweise mittels Pulverzugabe eindosiert werden.
   Damit wird insgesamt ein Proteinprodukt erhalten, das einen im Vergleich zum Stand der Technik hohen Flüssiganteil aufweist. Mit anderen Worten wird ein verarbeitbares Proteinprodukt ohne zusätzlicher Trocknung des Proteins erhalten, das der Lebensmittelproduktion zugeführt werden kann; zusätzl ich:
xi) Das aus Schritt xi) gewonnene saure Medium wird in vorteilhafter Ausführung mittels Wärmebehandlung von vorteilhalfterweise über 65°C pasteurisiert, um pathogene vitale Mikroorganismen abzutöten, und sodann der Lebensmittelproduktion zugeführt; oder zusätzlich bzw. alternativ
xii) gemäß einer vorteilhaften Ausführungsform wird die Proteinaufschlämmung aus Schritt x) mit einem Gehalt an Trockensubstanz von 25% bis 30% gegebenenfalls und alternativ unter Zwischenschaltung eines oder mehrerer der obigen Schritte xi) bis xiii) schockgefroren (quick freezing). Das kann gemäß einer vorteilhaften Ausführungsform dadurch vollzogen werden, dass die flüssige Proteinaufschlämmung in dünnen Schichten über einer Walze - einer sog. Scherbeneiswalze - gefroren und gleichmäßig in Flakes abgeschabt wird. Dabei wird die gekühlte Walze in das zu frostende Medium eingetaucht, womit sich ein Film auf der Walze bildet, der kontinuierlich gefriert und nachfolgend mittels einer Klinge abgeschabt wird. Letztendlich entsteht ein schüttfähiges Protein-Gut das der Lebensmittelproduktion zugeführt werden kann.

Das oben mit den Schritten i) bis ix) wiedergegebene Basisverfahren verfolgt ausschließlich den Prozessstrom mit eingeschlossenem Protein. Für ein ökologisch wertvolles Verarbeitungsverfahren gilt es ferner, die aus dem Basisverfahren abgeschiedenen Nebenprodukte geeignet weiter zu verwerten. Das betrifft beispielsweise die aus Schritt i) abgetrennten Schalen, wie auch die jeweiligen Abwasserströme und Grobfraktionen. Auf diese soll im Folgenden eingegangen werden:
Die aus Prozessschritt i) separierten Schalen können eingelagert werden und einer weiteren Verarbeitung zugeführt werden.

Die aus Schritt iii) separierte Grobfraktion mit einem Proteingehalt von maximal 15 % wird als eigener Nebenproduktstrom vermarktet und kann sowohl in der Lebensmittel- als auch der Tiernahrungsproduktion eingesetzt werden als Bindemittel, oder als Quelle für Protein und Kohlenhydrate.

Die aus Schritt v) erhaltene Faserfraktion wird einer Faser-Dehydrierung unterzogen. Gemäß einer vorteilhaften Ausführungsform erfolgt dies durch eine Bandfilterpresse. Das hieraus gewonnene Fasersubstrat kann in einem weiteren Trocknungsverfahren in vorteilhafter Weise zu einem pastösen Filtrat verarbeitet werden.

Schließlich können gemäß vorteilhafter Ausführungsform die in den jeweiligen Schritten vii) und/oder ix) gewonnenen Abwässer einer weiteren Protein-Ausfällung mittels beispielsweise Ultrafiltration oder Hitzekoagulation unterzogen werden.

Das erfindungsgemäße Verfahren wird nun anhand eines Ausführungsbeispiels im Detail näher erläutert. Das Verfahren wird anhand der Verarbeitung von frisch geernteten Erbsen beschrieben, wobei das Verfahren unabhängig vom Einsatz gelber oder grüner Erbsen ist.

Die als Ausgangsprodukt fungierenden frisch geernteten Erbsen werden zunächst geschält (Schritt i)). Dieser Vorgang kann vorteilhaft mittels Druckbeaufschlagung - (beispielsweise mittels Hochdruck-Luftstrahl) oder mittels Prallverfahren eines Fliehkraftschälers erfolgen. Bei letzterem wird das Schälgut über einen Einlauf in ein Wurfrad geleitet, wo es über einen Streuteiler gleichmäßig verteilt wird. Schließlich wird das Gut gezielt auf den Prallring geschleudert, der je nach Sorte aus Stahl oder Gummi besteht. Die Schälleistung lässt sich über das verstellbare Einlaufrohr regulieren und über die Drehzahl des Wurfrades auf das Produkt erwünschte abstimmen.

Sodann werden die geschälten Erbsen zu Mehl vermahlen (Schritt ii)). Dieser Mahlschritt erfolgt durch ebenso durch ein Druck- oder Prallverfahren - kann aber evtl. auch mittels anderer herkömmlichen Verfahren vollzogen werden.

Aus dem erhaltenen Medium wird mittels sog. Klassifizierung eine Feinfraktion von einer Grobfraktion separiert (Schritt iii) - Classifier). Die Feinfraktion unterscheidet sich mit einer Teilchengröße von durchschnittlich 15 *µ*m zur Grobfraktion, die alle Anteile mit einer durchschnittlich größeren Teilchengröße von 100 *µ*m umfasst. Das Verfahren erfolgt vorteilhaft durch eine Fliehkraft-Trennung im Luftstrom.

Die aus der Klassifizierung gewonnene Feinfraktion wird in einem Masseverhältnis von ca. 1:6 mit Wasser versetzt (1 Teil Feinfraktion auf 6 Teile Wasser) und der pH-Wert wird durch Zugabe von Natronlauge auf 8,5 eingestellt (Schritt iv)).

Die erhaltene wässrige Lösung wird in einen Dekanter gegeben, um unlösliche Fasern von Proteinanteilen zu trennen (Extrakt-Dekantierung von Schritt v)).

Im nächsten Schritt der Protein-Koagulation (Schritt vi)) wird der erhaltenen wässrigen Proteinlösung eine Säure zugegeben, um den pH-Wert auf ca. 4,5 zu senken. Als Säure kommen hier in vorteilhafter Weise Salzsäure oder Phosphorsäure in Betracht - es kann aber auch eine organische Säure hinzugefügt werden. Bei diesem pH-Wert gehen die Proteine (Globuline und Albumine) in Lösung.

Die Trennungen des erhaltenen Mediums gemäß Schritt vii) in eine Proteinaufschlämmung mit einem Trockengehalt von 20% bis 30% und weiters in ein Abwasserstrom erfolgt entweder durch eine zweistufige Trennung mittels Dekanter und anschließender Klärung der Flüssigphase (Polieren) durch einen Separator. Alternativ erfolgt die Trennung jedoch in vorteilhafter Weise einstufig mittels Sedikanter, bei dem das Medium einer hohen Beschleunigung unterzogen wird. Der Sedikanter vereint die Vorteile von Dekanter und Separator. So lassen sich Gemische effizient trennen, bei denen sowohl der Dekanter als auch der Separator nur unzureichende Ergebnisse liefern. Mit einem Zentrifugalfeld von 5.000 bis 10.000 g hat er eine hohe Klärleistung und eine optimale Abscheiderate. Wir bezeichnen diese Phase dann als Koagulations-Sedikantierung.

Der erhaltenen Protein-Aufschlämmung aus obiger Koagulation wird Wasser zugegeben (Schritt ix)), um den Anteil an Trockensubstanz auf ca. 12% zu senken. Um gleichzeitig den pH-Wert auf 4,5 zu halten, wird erneut Säure zugegeben. Als Säure kommen hier in vorteilhafter Weise wieder Salzsäure oder Phosphorsäure in Betracht - es kann aber auch eine organische Säure hinzugefügt werden.

Entscheidend erfolgt nun die zweite und wiederholte Trennung der Protein-Aufschlämmung, nämlich in eine Fraktion mit einem Trockengehalt von 25% bis 30% und in einen erneuten Abwasserstrom. Dieser Schritt erfolgt erneut entweder durch eine zweistufige Trennung mittels Dekanter und anschließender Klärung der Flüssigphase (Polieren) durch einen Separator. Alternativ erfolgt die Trennung jedoch wieder in vorteilhafter Weise einstufig mittels Sedikanter, bei dem das Medium auch hier wieder einer hohen Beschleunigung ausgesetzt wird. Der Sedikanter vereint auch hier die Vorteile von Dekanter und Separator. So lassen sich Gemische effizient trennen, bei denen sowohl der Dekanter als auch der Separator nur unzureichende Ergebnisse liefern. Mit einem Zentrifugalfeld von 5.000 bis 10.000 g hat er eine hohe Klärleistung und eine optimale Abscheiderate.

Das nun erhaltene Protein-Endprodukt kann der Lebensmittelproduktion direkt zugeführt werden oder aber als gefrorener Artikel mittels beispielsweise einer Scherbeneiswalze eingefroren und für eine spätere Verarbeitung vorgesehen werden.

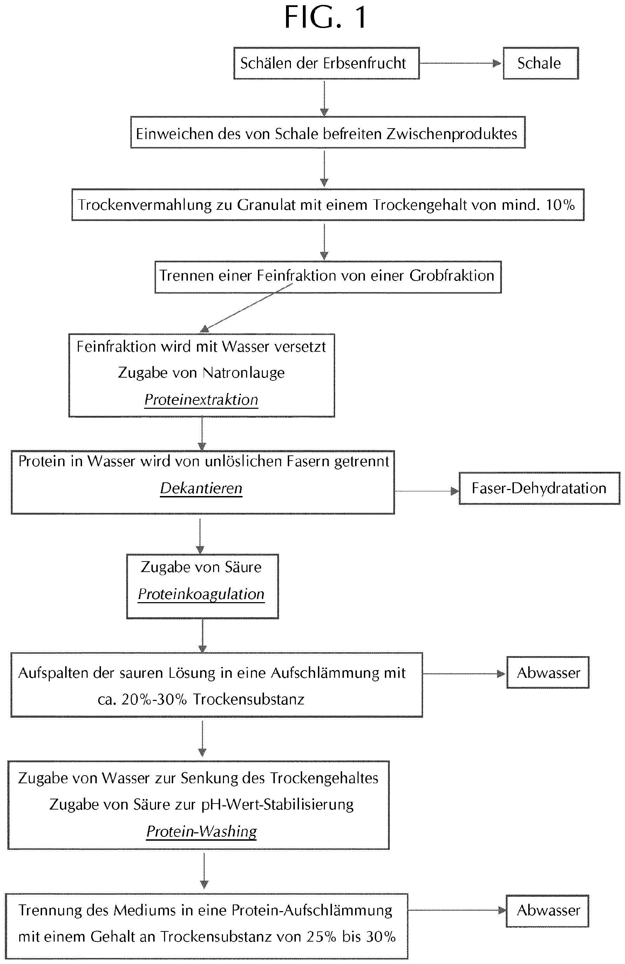

## Patentansprüche

1. Verfahren zum Herstellen eines Proteinproduktes aus einem Pflanzenausgangsmaterial als ganze Leguminosensaat, Leguminosengranulat oder Leguminosenmehl mit folgenden Schritten:
- Trennen einer Feinfraktion von einer Grobfraktion;
- Versetzen der Feinfraktion mit Wasser und Zugeben von Lauge, vorteilhaft Natronlauge, zur Verschiebung des pH-Wertes in den basischen Bereich, um Protein zu extrahieren;
- Separieren unlöslicher Fasern von Protein in wässriger Lösung mittels Dekantierens;
- Zugeben einer Säure zu der erhaltenen wässrigen Proteinlösung, um den pH-Wert in den sauren Wertebereich zu verschieben und damit eine Proteinkoagulation zu erzielen;
- Aufspalten der sauren Proteinlösung in eine Protein-Aufschlämmung mit ca. 20%-30% Trockensubstanz und einen Abwasserstrom;
- Zugeben von Wasser zur Senkung des Trockensubstanzgehaltes und ausgleichende Zugabe von Säure zum Halten des Säurepegels;
- weiteres Trennen des Mediums in eine Protein-Aufschlämmung mit einem Gehalt an Trockensubstanz von 25% bis 30% und in einen weiteren Abwasserstrom; und
- trocknungsfreies Herstellen des Proteinproduktes aus der Protein-Aufschlämmung mit dem Gehalt an Trockensubstanz von 25% bis 30%.

2. Verfahren nach Anspruch 1, **dadurch gekennzeichnet, dass** das Trennen des Ausgangsmaterials in die Feinfraktion von der Grobfraktion eine Feinfraktion mit Teilchengrößen von durchschnittlich ca. 15 *µ*m zur Grobfraktion mit Teilchengrößen von durchschnittlich größer als ca. 100 *µ*m betrifft.

3. Verfahren nach einem der vorangehenden Ansprüche, **dadurch gekennzeichnet, dass** der Trennungs-Schritt des Mediums in eine Protein-Aufschlämmung mit einem Gehalt an Trockensubstanz von 25% bis 30% und in einen weiteren Abwasserstrom wiederholt ausgeführt wird, bevor die Aufschlämmung der trocknungsfreien Herstellung zugeführt wird.

4. Verfahren nach einem der vorangehenden Ansprüche, **dadurch gekennzeichnet, dass** die Protein-Aufschlämmung extrudiert wird und das Protein auf einen pH-Wert zwischen 4,0 und 9,0 eingestellt wird, um das Proteinprodukt herzustellen.

5. Verfahren nach Anspruch 4, **dadurch gekennzeichnet, dass** zusätzlich mindestens ein weiteres Mittel aus der folgenden Menge beigemischt wird: ein Triebmittel, beispielsweise Karbonat, Phosphat oder Tartrat beinhaltend, oder eine Mischung hieraus, Öle und/oder Fette, und/oder Aromen.

6. Verfahren nach einem der vorangehenden Ansprüche, **dadurch gekennzeichnet, dass** nachfolgend dem Erhalt der Protein-Aufschlämmung mit dem Gehalt an Trockensubstanz von 25% bis 30% diese mittels Wärmebehandlung pasteurisiert wird, um pathogene vitale Mikroorganismen abzutöten.

7. Verfahren nach Anspruch 6, **dadurch gekennzeichnet, dass** die Pasteurisierung bei über 65° C vorgenommen wird.

8. Verfahren nach einem der Ansprüche 1 bis 3, und 6 bis 7, **dadurch gekennzeichnet, dass** die Protein-Aufschlämmung mit dem Gehalt an Trockensubstanz von 25% bis 30% gefroren wird, um ein schüttfähiges Proteinprodukt zu erhalten.

9. Verfahren nach Anspruch 8, **dadurch gekennzeichnet, dass** der Gefrierschritt durch Gefrieren in dünnen Schichten über einer gekühlten Walze mit gleichmäßigem Abschaben von Flakes oder Flocken erfolgt.

10. Proteinprodukt, insbesondere als Nahrungsmittelgrundstoff für Lebensmittel, das gemäß dem Verfahren nach einem der Ansprüche 1 bis 9 hergestellt ist.

11. Vorrichtung zur Herstellung eines Proteinproduktes aus einem Pflanzenausgangsmaterial als ganze Leguminosensaat, Leguminosengranulat oder Leguminosenmehl, wobei die Vorrichtung aufweist:
- eine erste Trennvorrichtung zum Trennen einer Fein-von einer Grobfraktion, insbesondere für eine Teilchentrennung von Teilchengrößen von durchschnittlich ca. 15 *µ*m zu Teilchen mit einer Teilchengrößen von durchschnittlich größer als ca. 100 *µ*m;
- einen ersten Prozessreaktor zum Extrahieren von Protein unter Laugenzugabe;
- einen Dekanter zum Separieren unlöslicher Fasern von Protein in wässriger Lösung;
- einen zweiten Prozessreaktor, der säurefest ist, um eine Proteinkoagulation zu schaffen
- eine zweite Trennvorrichtung zum Trennen einer Proteinaufschlämmung mit einem Gehalt an Trockensubstanz von 25% bis 30% und in einen weiteren Abwasserstrom.

12. Vorrichtung nach Anspruch 11, die ferner einen Extruder aufweist, in dem die Protein-Aufschlämmung extrudiert wird und das Protein auf einen pH-Wert zwischen 4,0 und 9,0 eingestellt wird, um ein Proteinprodukt herzustellen.

13. Vorrichtung nach Anspruch 11 oder 12, die ferner einen Pasteurisator aufweist.

14. Vorrichtung nach einem der Ansprüche 10 bis 13, die ferner eine Scherbeneiswalze umfasst.
